# FASCICULE DE BREVET EUROPEEN

(11) **EP 1 071 182 B1**
(45) Date de publication et mention de la délivrance du brevet: **11.08.2010**
(21) Numéro de dépôt: 00401623.4
(22) Date de dépôt: 08.06.2000
(51) Int. Cl.: H02G 3/12

(54) **Boîtier d'isolation pour appareil à rapporter sur le socle d'une goulotte par l'intermédiaire d'un support**
Isoliergehäuse für ein Gerät anzubringen auf einen Kabelkanal über einem Träger
Insulated housing for an apparatus to be supported on a duct

(30) Priorité: 20.07.1999 FR 9909400
(43) Date de publication de la demande: 24.01.2001
(73) Titulaire: Legrand France, 87000 Limoges (FR); Legrand SNC, 87000 Limoges (FR)
(72) Inventeur: Bellanger, Jérôme, 72000 Le Mans (FR)
(74) Mandataire: Santarelli

(56) Documents cités:
- EP-A- 0 222 116
- EP-A- 0 289 410
- EP-A- 0 391 713
- WO-A-96/11518

## Description

La présente invention concerne d'une manière générale l'équipement des goulottes du type de celles mises en oeuvre, par exemple, pour le support, le logement et la protection de divers appareils, et, en particulier, de divers appareils électriques, aussi bien que pour le logement et la protection des câbles, conducteurs ou autres canalisations nécessaires à la desserte de ces appareils.

De manière usuelle, on désigne ici par goulotte un profilé formé, d'une part, d'un socle, dont la section transversale est ouverte, et, d'autre part, d'un couvercle, qui est rapporté, en pratique par encliquetage, sur ce socle, pour la fermeture de celui-ci.

La présente invention vise plus particulièrement le cas où, pour son assujettissement à une telle goulotte, un appareil est rapporté sur le socle de celle-ci par l'intermédiaire d'un support lui-même rapporté sur ce socle.

Plus particulièrement, encore, elle vise le cas où le support ainsi mis en oeuvre pour permettre de rapporter un appareil sur le socle de la goulotte intervient au débouché de ce socle, en s'étendant par exemple de l'un à l'autre de deux retours que présente alors celui-ci le long du bord libre de ses ailes latérales.

Plus particulièrement, enfin, la présente invention concerne le boîtier d'isolation qu'il est alors usuel de disposer autour de l'appareil, à distance de celui-ci, pour assurer toute la protection souhaitable contre un accès direct aux parties actives d'un tel appareil lorsque le couvercle de la goulotte est enlevé, ce qui est le cas, par exemple, si un ou plusieurs câbles ou conducteurs supplémentaires sont à installer.

Le plus souvent, à ce jour, et cela est le cas par exemple dans la demande de brevet européen No 0 222 116, ce boîtier d'isolation est fixé sur le fond du socle de la goulotte.

Mais il se pose alors deux problèmes.

Le premier tient à ce que, lorsque le boîtier d'isolation s'étend ainsi à compter du fond du socle, le seul espace demeuré libre dans celui-ci pour le passage des câbles ou conducteurs nécessaires se trouve réduit à celui subsistant éventuellement encore latéralement de part et d'autre de ce boîtier d'isolation, ce qui peut être à l'origine de difficultés lorsque ce boîtier d'isolation présente une largeur relativement importante et/ou lorsque la goulotte présente elle-même une largeur relativement réduite.

Le deuxième problème tient à ce que le boîtier d'isolation doit lui-même être adapté en hauteur à la hauteur de la goulotte.

Dans la demande de brevet européen No 0 222 116 il a été proposé, pour ce faire, que ce boîtier d'isolation soit réalisé en deux parties montées mobiles en hauteur l'une par rapport à l'autre, ce qui en complique singulièrement la fabrication et en rend donc plus onéreuse celle-ci.

A défaut, il faut pouvoir disposer d'autant de boîtiers d'isolation de hauteurs différentes qu'il peut y avoir de goulottes de hauteurs elles-mêmes différentes à équiper.

Pour écarter au moins en partie ces problèmes, il a été proposé, et cela est le cas par exemple dans la demande de brevet internationale No 96/11518, de suspendre le boîtier d'isolation au support portant l'appareil concerné.

Plus précisément, il a été proposé, dans cette demande de brevet internationale No 96/11518, un boîtier d'isolation comportant, d'une part, des moyens de suspension, par lesquels il est apte à être attelé à un tel support, et, d'autre part, un habillage, par lequel il est apte à entourer à distance l'appareil rapporté sur ce support, cet habillage comportant en pratique globalement un fond et une paroi latérale et étant ainsi en forme générale de cuvette.

Contrairement au boîtier d'isolation fixé sur le fond du socle de la goulotte, un tel boîtier d'isolation autorise avantageusement le passage de câbles ou de conducteurs entre lui et ce fond.

Mais, dans la demande de brevet internationale No 96/11518, les moyens de suspension dont est équipé ce boîtier d'isolation se réduisent à des crans qui, établis à un même niveau, font saillie directement sur la paroi latérale de son habillage, pour coopération avec des crans complémentaires prévus corollairement à cet effet sur le support à équiper.

Il en résulte que la hauteur de suspension de ce boîtier d'isolation dans la goulotte est immuable, et qu'il en est de même pour la hauteur de la paroi latérale de son habillage.

Si, donc, un tel boîtier d'isolation peut convenir pour une goulotte de hauteur donnée et/ou pour un support de type lui-même bien déterminé, il n'en est pas nécessairement le cas pour des goulottes de hauteurs différentes et/ou pour des supports de types eux-mêmes différents.

En particulier, pour une goulotte de faible épaisseur, pour laquelle il est usuel de mettre en oeuvre un support rehaussé intervenant au moins en partie en saillie sur une telle goulotte, le boitier d'isolation suspendu à ce support peut, encore, comme précédemment, diminuer de manière très défavorable le volume interne utile laissé libre pour le passage de câbles ou de conducteurs entre lui et le fond du socle.

La présente invention a d'une manière générale pour objet une disposition permettant de minimiser, sinon annuler, cet inconvénient.

De manière plus précise, elle a pour objet un boîtier d'isolation pour appareil à rapporter sur le socle d'une goulotte par l'intermédiaire d'un support, le socle comportant un fond, et deux ailes latérales, qui s'étendent sensiblement perpendiculairement au fond, les deux ailes latérales comportant, le long de leur bord libre deux retours, qui s'étendent en direction l'un de l'autre, parallèlement au fond, en définissant l'un avec l'autre un débouché, le support intervenant au débouché dudit socle en s'étendant de l'un à l'autre desdits deux retours, le boitier comportant, d'une part, des moyens de suspension, par lesquels il est apte à être attelé à un tel support, et, d'autre part, un habillage, par lequel il est apte à entourer à distance l'appareil rapporté sur ce support, cet habillage comportant, sur une partie au moins de son pourtour, une paroi latérale, ce boîtier d'isolation étant d'une manière générale caractérisé en ce que ses moyens de suspension sont des suspentes munies de moyens d'attelage à au moins deux niveaux différents, et en ce que, conjointement, sur une partie au moins de son pourtour, la portion supérieure, au moins, de la paroi latérale de son habillage est escamotable.

Grâce à cette disposition, la hauteur de suspension du boîtier d'isolation suivant l'invention dans la goulotte peut être ajustée au mieux en fonction de la hauteur de celle-ci et/ou en fonction du type du support rapporté sur le socle de cette goulotte.

Autrement dit, la disposition suivant l'invention permet avantageusement d'adapter au mieux le volume de ce boîtier d'isolation à la configuration générale de l'ensemble, et, ainsi, de minimiser au mieux son impact sur le volume interne utile de la goulotte, en laissant ainsi dans celle-ci tout l'espace nécessaire pour le passage des câbles ou conducteurs requis.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un socle de goulotte équipé d'un support auquel est attelé un boîtier d'isolation suivant l'invention ;
la figure 2 est, dérivée de la figure 1, une vue en perspective éclatée de l'ensemble ;
la figure 3 est une vue en perspective du seul boîtier d'isolation suivant l'invention, vu de dessus, avant toute découpe éventuelle de ce boîtier d'isolation ;
la figure 4 est, à échelle supérieure, une vue partielle en plan de ce boîtier d'isolation, vu de dessus, suivant la flèche IV de la figure 3 ;
la figure 5 en est une vue partielle en coupe longitudinale, suivant la ligne V-V de la figure 4 ;
la figure 6 en est une vue en coupe transversale, suivant la ligne VI-VI de la figure 3, pour une première application ;
la figure 7 en est une vue en coupe transversale analogue à celle de la figure 6, pour une deuxième application ;
la figure 8 est une vue en perspective éclatée qui, analogue à celle de la figure 2, se rapporte à une autre application ;
la figure 9 est, à échelle supérieure, et suivant la ligne IX-IX de la figure 8, une vue en coupe transversale du boîtier d'isolation suivant l'invention dans cette autre application ;
la figure 10 est une vue en coupe transversale analogue à celle de la figure 9, pour une autre application ;
la figure 11 est une vue en perspective d'une variante de réalisation du boîtier d'isolation suivant l'invention, vu de dessous.

Tel qu'illustré sur ces figures, la goulotte 10 à équiper comporte un socle 11 dont la section transversale est ouverte.

Dans la forme de réalisation représentée, cette section transversale est globalement rectangulaire, le socle 11 comportant, d'une part, un fond 12, par lequel il est adapté à être appliqué à une quelconque paroi, non représentée, et, d'autre part, deux ailes latérales 13, qui s'étendent sensiblement perpendiculairement au fond 12, et qui ont l'une et l'autre une même hauteur.

En outre, dans cette forme de réalisation, le socle 11 présente deux retours 14, qui, issus chacun respectivement de ces deux ailes latérales 13, le long du bord libre de celles-ci, s'étendent en direction l'un de l'autre, parallèlement au fond 12, en définissant l'un avec l'autre son débouché 15.

Bien entendu, la goulotte 10 se complète par un couvercle, non représenté, propre à être rapporté sur le socle 11 pour la fermeture de celui-ci.

En pratique, ce couvercle s'étend alors de l'un à l'autre des retours 14, et, pour sa retenue, ceux-ci forment chacun, le long de leur bord libre, une gouttière d'encliquetage 17.

Ces dispositions sont bien connues par elles-mêmes, et, ne relevant pas, en propre, de la présente invention, elles ne seront pas décrites plus en détail ici.

De manière également connue en soi, lorsqu'un quelconque appareil, et, par exemple, un quelconque appareil électrique, non représenté, est à rapporter sur le socle 11, il est mis en oeuvre un support 18, qui est propre à recevoir un tel appareil, et qui est lui-même adapté à être rapporté sur le socle 11.

Ce support 18 étant, lui aussi, bien connu par lui-même, et ne relevant pas en propre de la présente invention, il ne sera pas non plus décrit en détail ici.

Il suffira d'indiquer que, dans les formes de réalisation représentées, il a, en plan, un contour globalement rectangulaire, et, sur deux côtés opposés, il présente des moyens de rainure 19 par lesquels il est adapté à venir en prise avec les retours 14 du socle 11, par simple emboîtement sur les gouttières d'encliquetage 17 formées par ceux-ci.

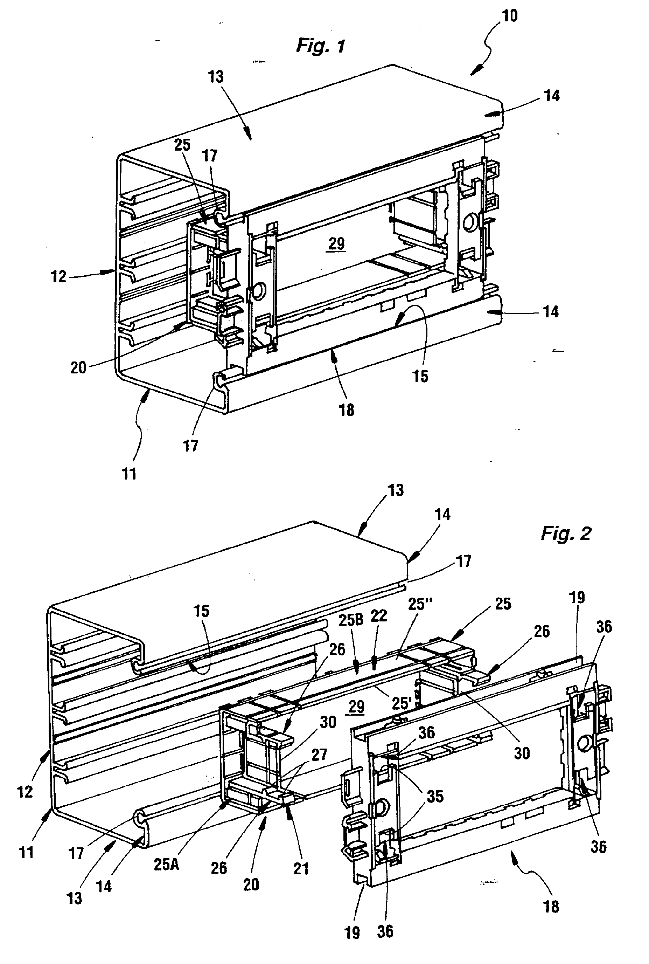

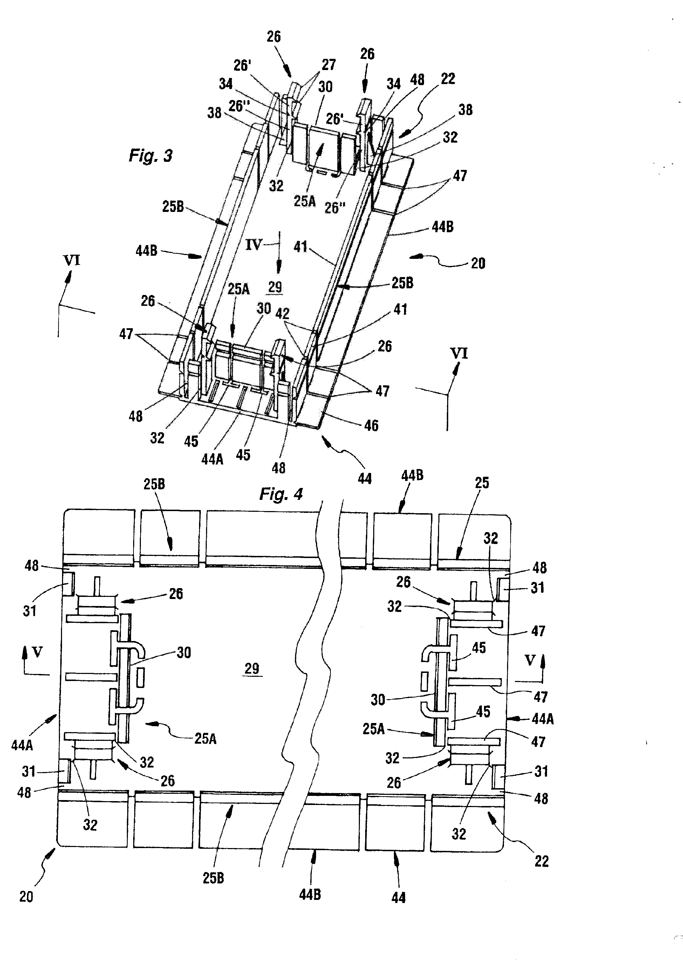

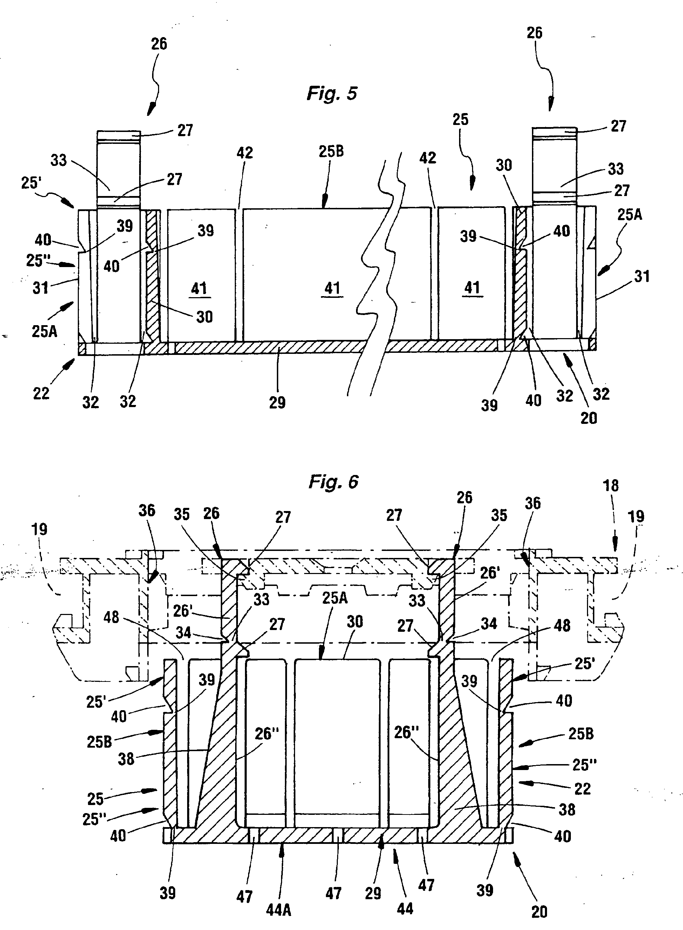

Dans la forme de réalisation plus particulièrement représentée ou schématisée sur les figures 1 à 7, le support 18 se réduit à un cadre, et il intervient entièrement à niveau avec les retours 14 du socle 11, sans faire saillie sur celui-ci.

De manière connue en soi, enfin, il est associé, à l'appareil ainsi rapporté sur le socle 11 par l'intermédiaire d'un support 18, un boîtier d'isolation 20 comportant, d'une part, suivant des dispositions décrites plus en détail ultérieurement, des moyens de suspension 21, par lesquels il est apte à être attelé à un tel support 18, et, d'autre part, un habillage 22, par lequel il est apte à entourer à distance l'appareil rapporté sur ce support 18, cet habillage 22 comportant, lui-même, à cet effet, sur une partie au moins de son pourtour, une paroi latérale 25.

Suivant l'invention, les moyens de suspension 21 du boîtier d'isolation 20 sont des suspentes 26 munies de moyens d'attelage 27 à au moins deux niveaux différents, et, conjointement, sur une partie au moins du pourtour de ce boîtier d'isolation 20, la portion supérieure 25', au moins, de la paroi latérale 25 de son habillage 22 est escamotable.

Dans la forme de réalisation représentée, la paroi latérale 25 de l'habillage 22 s'étend sur la totalité, ou quasi totalité, de son pourtour, et, outre cette paroi latérale 25, cet habillage 22 comporte un fond 29.

Il est donc en forme générale de cuvette.

Comme le fond 29, la paroi latérale 25 a, en plan, un contour globalement rectangulaire, en comportant, d'une part, deux panneaux transversaux 25A, et, d'autre part, en alternance avec ces deux panneaux transversaux 25A, deux panneaux longitudinaux 25B.

Mais, dans la forme de réalisation représentée, la partie médiane 30 des panneaux transversaux 25A est en retrait vers l'intérieur par rapport à leur partie d'extrémité 31, tout en étant parallèle à celle-ci.

En outre, dans cette forme de réalisation, les suspentes 26 sont issues du fond 29 de l'habillage 22, et elles participent à la constitution de la paroi latérale 25 de celui-ci.

Plus précisément, ces suspentes 26 interviennent entre la partie médiane 30 des panneaux transversaux 25A de cette paroi latérale 25 et les parties d'extrémité 31 de ces panneaux transversaux 25A.

Il y a, ainsi, pour l'ensemble du boîtier d'isolation 20, quatre suspentes 26, à raison d'une par zone angulaire de son habillage 22.

En pratique, ces suspentes 26 se présentent sous la forme de languettes, qui, en largeur, s'étendent sensiblement parallèlement aux panneaux longitudinaux 25B de la paroi latérale 25 de l'habillage 22, et, donc, sensiblement perpendiculairement tant à la partie médiane 30 des panneaux transversaux 25A de cette paroi latérale 25 qu'aux parties d'extrémité 31 de ces panneaux transversaux 25A, et dont la hauteur, à compter du fond 29 de l'habillage 22, est supérieure à celle de la paroi latérale 25.

En pratique, également, les suspentes 26 sont isolées du reste de la paroi latérale 25 de l'habillage 22 par des fentes 32 qui courent sur toute leur hauteur à compter du fond 29 de cet habillage 22.

Pour chaque suspente 26 il y a ainsi, d'un côté, une fente 32 qui l'isole de la partie médiane 30 du panneau transversal 25A correspondant de la paroi latérale 25, et une fente 32 qui l'isole de la partie d'extrémité 31 correspondante de ce panneau transversal 25A.

Dans la forme de réalisation représentée, les moyens d'attelage 27 dont sont dotées les suspentes 26 sont de simples crans qui s'étendent parallèlement au fond 29 de l'habillage 22.

Par exemple, et tel que représenté, ces moyens d'attelage 27 font saillie sur celle des faces des suspentes 26 qui est tournée vers l'intérieur, et ils s'étendent parallèlement aux panneaux longitudinaux 25B de la partie latérale 25 de l'habillage 22.

Préférentiellement, et cela est le cas dans la forme de réalisation représentée, à compter de leur extrémité libre, les suspentes 26 comportent, chacune, au moins deux tronçons 26', 26", à savoir un tronçon supérieur 26' et un tronçon inférieur 26", qui, pour la présence de moyens d'attelage 27 à deux niveaux différents, sont chacun équipés de tels moyens d'attelage 27, et qui sont séparés l'un de l'autre par une zone de moindre résistance 33 propre à permettre l'élimination du tronçon 26', 26" le plus éloigné du fond 29 de l'habillage 22, en l'espèce le tronçon supérieur 26'.

Comme les moyens d'attelage 27, la zone de moindre résistance 33 s'étend parallèlement au fond 29 de l'habillage 22.

Elle résulte, par exemple, d'une saignée 34 affectant en creux la face des suspentes 26 opposée à celle sur laquelle font saillie les moyens d'attelage 27.

En pratique, pour l'un et l'autre des deux tronçons 26', 26" des suspentes 26, les moyens d'attelage 27 sont de même type.

Ils sont ainsi tous susceptibles de coopérer de la même manière avec les moyens d'attelage 35 prévus de manière complémentaire sur le support 18.

En pratique, ces moyens d'attelage 35 sont de simples crans formés par le bord d'ouvertures 36 qui, prévues à cet effet sur le support 18, en correspondance avec les suspentes 26 du boîtier d'isolation 20, permettent à ces suspentes 26 de s'engager sur ce support 18.

Pour le tronçon supérieur 26' des suspentes 26, les moyens d'attelage 27 s'étendent à ras avec l'extrémité libre de ce tronçon supérieur 26'.

Pour le tronçon inférieur 26", les moyens d'attelage 27 s'étendent à ras avec la zone de moindre résistance 33 correspondante.

Dans la forme de réalisation représentée, les moyens d'attelage 27 du tronçon inférieur 26" des suspentes 26 s'étendent en pratique sensiblement à niveau avec le bord libre de la paroi latérale 25 de l'habillage 22, tout en étant légèrement au dessus de ce bord libre.

Dans la forme de réalisation représentée, le tronçon inférieur 26" des suspentes 26 se trouve par ailleurs raidi par une nervure 38, qui s'étend sur une partie au moins de sa hauteur à compter du fond 29 de l'habillage 22, du côté opposé aux moyens d'attelage 27.

Dans la forme de réalisation représentée, la paroi latérale 25 de l'habillage 22 est escamotable sur toute sa hauteur.

A compter de son bord libre, la paroi latérale 25 de l'habillage 22 est, pour ce faire, subdivisée, dans la forme de réalisation représentée, en au moins deux portions 25', 25", avec, à la base de chacune de ces portions 25', 25", une zone de moindre résistance 39 propre à permettre l'élimination de la ou des portions 25', 25" sus-jacentes.

Par exemple, et tel que représenté, seules deux portions 25', 25" sont ainsi prévues sur toute la hauteur de la paroi latérale 25' de l'habillage 22, à savoir, outre la portion supérieure 25', une portion inférieure 25".

Pour chacune de ces portions 25', 25", la zone de moindre résistance 39 résulte, en pratique, d'une saignée 40 affectant en creux la face extérieure de la paroi latérale 25.

Pour la portion inférieure 25", cette saignée 40 court à ras avec le fond 29.

Le long du pourtour du boîtier d'isolation 20, la paroi latérale 25 de l'habillage 22 est, dans la forme de réalisation représentée, fractionnée en pans 41 par des fentes 42 qui s'étendent en pratique perpendiculairement au fond 29.

Il en est ainsi tant pour les panneaux transversaux 25A de cette paroi latérale 25 que pour ses panneaux longitudinaux 25B.

Sur une partie au moins du pourtour du boîtier d'isolation 20, le fond 29 de l'habillage 22 comporte, au moins localement, dans la forme de réalisation représentée, au-delà de la paroi latérale 25 de cet habillage 22, un prolongement 44, et ce prolongement 44 est au moins en partie escamotable.

En pratique, comme la paroi latérale 25, ce prolongement 44 du fond 29 comporte, d'une part, deux panneaux transversaux 44A, qui s'étendent au droit de la partie médiane 30 des panneaux transversaux 25A de cette paroi latérale 25, entre les parties d'extrémité 31 de ces panneaux transversaux 25A, et, d'autre part, des panneaux longitudinaux 44B, qui s'étendent le long des panneaux longitudinaux 25B de cette paroi latérale 25.

Préférentiellement, le prolongement 44 du fond 29 de l'habillage 22 est escamotable sur toute son extension, c'est-à-dire tant en ce qui concerne ses panneaux transversaux 44A qu'en ce qui concerne ses panneaux longitudinaux 44B.

Par exemple, et tel que représenté, les panneaux transversaux 44A ont une épaisseur sensiblement égale à celle du fond 29, et, pour être escamotables, ils sont séparés de celui-ci par des fentes 45, qui, établies de place en place, le long de leur racine, affectent la totalité de leur épaisseur.

Corollairement, les panneaux longitudinaux 44B ont une épaisseur largement inférieure à celle du fond 29, ce qui suffit à les rendre escamotables.

Comme la paroi latérale 25 de l'habillage 22, le prolongement 44 du fond 29 de cet habillage 22 est, dans la forme de réalisation représentée, fractionné en pans 46 par des fentes 47.

En pratique, pour les panneaux longitudinaux 44B du prolongement 44, ces fentes 47 sont établies chacune respectivement en correspondance avec les fentes 42 fractionnant en pans 41 les panneaux longitudinaux 25B de la paroi latérale 25.

Enfin, dans la forme de réalisation représentée, les panneaux transversaux 25A de la paroi latérale 25 de l'habillage 22 sont eux-mêmes séparés des panneaux longitudinaux 25B de cette paroi latérale 25 par des fentes 48 qui courent sur toute la hauteur de cette paroi latérale 25, dans les zones d'angle de celle-ci.

Suivant la première application illustrée sur les figures 1 à 6, la paroi latérale 25 de l'habillage 22 est conservée dans son intégrité, et il en est de même des suspentes 26.

En revanche, sur les figures 1, 2 et 6, les panneaux longitudinaux 44B du prolongement 44 du fond 29 de cet habillage 22 ont été éliminés.

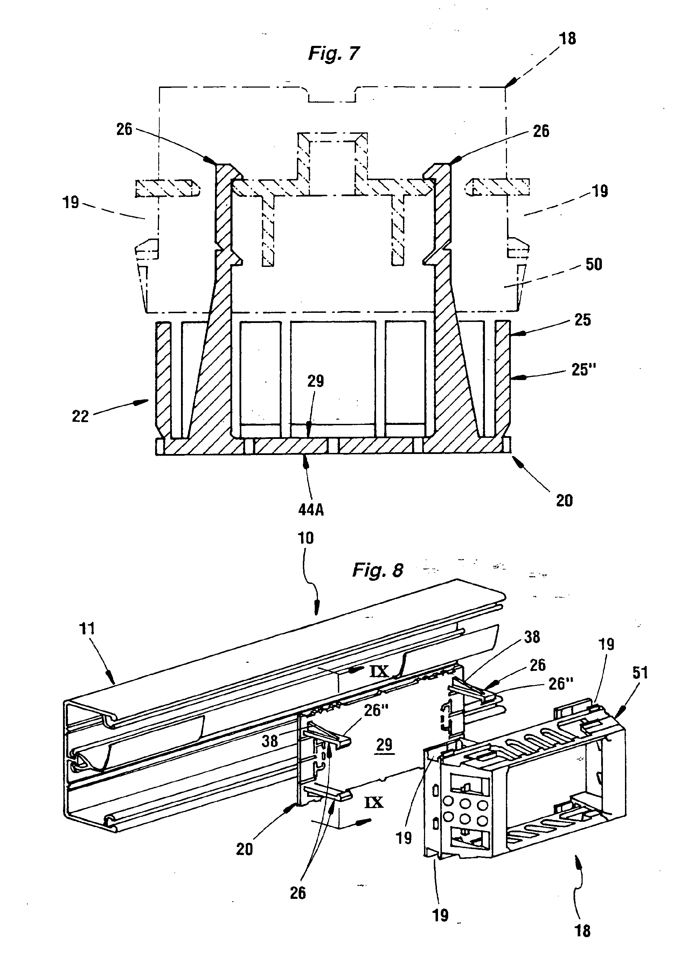

Il en est de même dans la deuxième application illustrée sur la figure 7.

Mais, en outre, dans celle-ci, la portion supérieure 25' de la paroi latérale 25 de l'habillage 22 a été éliminée, seule étant conservée la portion inférieure 25" de cette paroi latérale 25, parce que, tel que schématisé en traits interrompus sur la figure 7, le support 18 est d'un type différent du précédent, ce support 18 présentant un soubassement 50 en dessous de ses moyens de rainure 19.

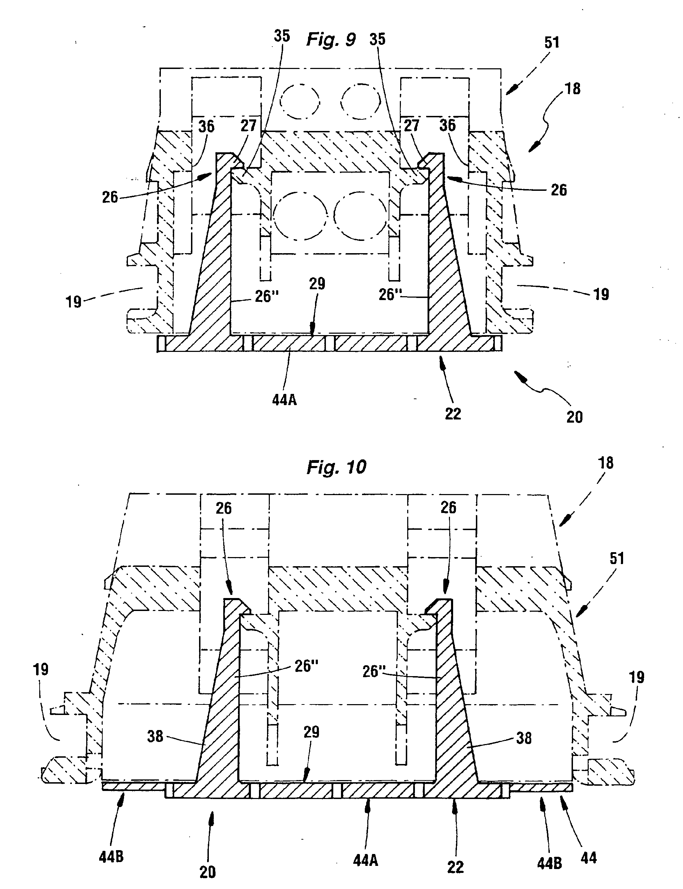

Dans l'application illustrée sur les figures 8 et 9, le support 18 est encore d'un type différent.

Il s'agit, en pratique, d'un support 18 rehaussé, c'est-à-dire d'un support 18 présentant, au-dessus de ses moyens de rainure 19, une superstructure 51 par laquelle il est destiné à faire au moins en partie saillie sur le socle 11, lorsque, comme en l'espèce, la hauteur, ou profondeur, de celui-ci est relativement faible.

Dans ce cas, la paroi latérale 25 de l'habillage 22 du boîtier d'isolation 20 est à son tour intégralement éliminée, comme représenté.

Il en est de même pour l'application illustrée sur la figure 10, qui est similaire à celle illustrée sur les figures 8 et 9, mais pour laquelle le socle 11 est supposé avoir une largeur supérieure.

Dans ce cas, et comme représenté, les panneaux longitudinaux 44B du prolongement 44 du fond 29 de l'habillage 22 sont avantageusement conservés, pour satisfaire à l'isolation souhaitable.

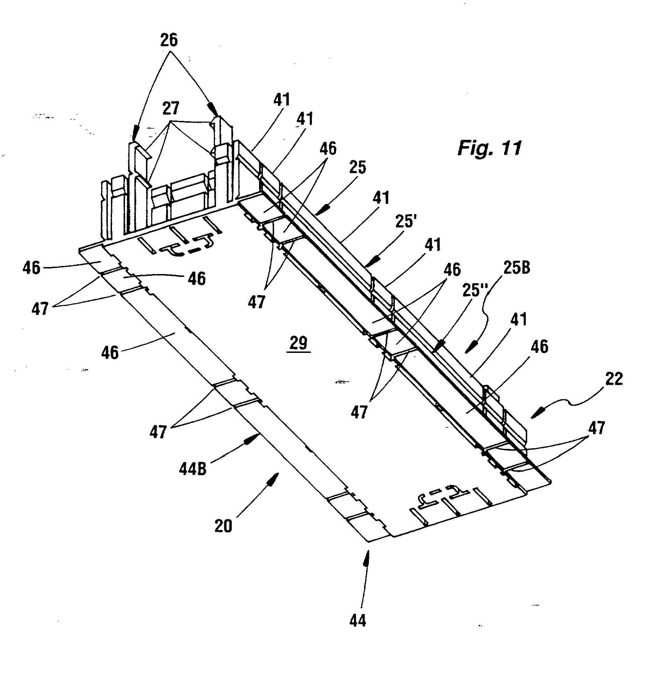

Quant à la forme de réalisation représentée sur la figure 11, elle se rapporte simplement à un boîtier d'isolation 20 de longueur supérieure à celle du boîtier d'isolation 20 précédent.

Dans ce cas, il est prévu, sur les panneaux longitudinaux 25B de la paroi latérale 25 de l'habillage 22 un nombre supérieur de pans 41, et il en est de même pour les pans 46 des panneaux longitudinaux 44B du prolongement 44 du fond 29 de cet habillage 22.

Mais, pour le reste, les dispositions sont du même type que celles précédemment décrites.

Dans tous les cas, le boîtier d'isolation 20 suivant l'invention peut avantageusement être réalisé en une seule pièce, par moulage d'une quelconque matière synthétique.

Ainsi qu'il est aisé de le comprendre, le fait que la partie médiane 30 des panneaux transversaux 25A de la paroi latérale 25 de son habillage 22 soit en retrait par rapport aux parties d'extrémité 31 de ces panneaux transversaux 25A, avec, dans l'intervalle, les suspentes 26, est avantageusement de nature à faciliter ce moulage.

## Revendications

1. Boîtier d'isolation (20) pour appareil à rapporter sur le socle (11) d'une goulotte (10), par l'intermédiaire d'un support (18), le socle (11) comportant un fond (12), et deux ailes latérales (13), qui s'étendent sensiblement perpendiculairement au fond (12), les deux ailes latérales (13) comportant, le long de leur bord libre deux retours (14), qui s'étendent en direction l'un de l'autre, parallèlement au fond (12), en définissant l'un avec l'autre un débouché (15), le support (18) intervenant au débouché (15) dudit socle (11) en s'étendant de l'un à l'autre desdits deux retours (14), le boitier (20) comportant, d'une part, des moyens de suspension (21), par lesquels il est apte à être attelé à un tel support (18), et, d'autre part, un habillage (22), par lequel il est apte à entourer à distance l'appareil rapporté sur ce support (18), cet habillage (22) comportant, sur une partie au moins de son pourtour, une paroi latérale (25), **caractérisé en ce que** ses moyens de suspension (21) sont des suspentes (26) munies de moyens d'attelage (27) à au moins deux niveaux différents, et **en ce que**, conjointement, sur une partie au moins de son pourtour, la portion supérieure (25'), au moins, de la paroi latérale (25) de son habillage (22) est escamotable.

2. Boîtier d'isolation suivant la revendication 1, **caractérisé en ce que**, à compter de leur extrémité libre, les suspentes (26) comportent au moins deux tronçons (26', 26"), qui, pour la présence de moyens d'attelage (27) à deux niveaux différents, sont chacun équipés de tels moyens d'attelage (27), et qui sont séparés l'un de l'autre par une zone de moindre résistance (33) propre à permettre l'élimination du tronçon (26') le plus éloigné du fond (29) de l'habillage (22).

3. Boîtier d'isolation suivant la revendication 2, **caractérisé en ce que**, pour l'un et l'autre des deux tronçons (26', 26") des suspentes (26), les moyens d'attelage (27) sont de même type.

4. Boîtier d'isolation suivant l'une quelconque des revendications 1 à 3, **caractérisé en ce que**, l'habillage (22) comportant un fond (29), les suspentes (26) sont issues de ce fond (29).

5. Boîtier d'isolation suivant la revendication 4, **caractérisé en ce que** les suspentes (26) participent à la constitution de la paroi latérale (25) de l'habillage (22).

6. Boîtier d'isolation suivant la revendication 5, **caractérisé en ce que** les suspentes (26) sont isolées du reste de la paroi latérale (25) de l'habillage (22) par des fentes (32) qui courent sur toute leur hauteur.

7. Boîtier d'isolation suivant l'une quelconque des revendications 1 à 6, **caractérisé en ce que** la paroi latérale (25) de l'habillage (22) a, en plan, un contour globalement rectangulaire, en comportant deux panneaux transversaux (25A), et, en alternance avec ces deux panneaux transversaux (25A), deux panneaux longitudinaux (25B), et la partie médiane (30) des panneaux transversaux (25A) est en retrait par rapport à leur partie d'extrémité (31).

8. Boîtier d'isolation suivant les revendications 5 et 7, prises conjointement, **caractérisé en ce que** les suspentes (26) interviennent entre la partie médiane (30) des panneaux transversaux (25A) de la paroi latérale (25) de l'habillage (22) et les parties d'extrémité (31) de ces panneaux transversaux (25A).

9. Boîtier d'isolation suivant l'une quelconque des revendications 1 à 8, **caractérisé en ce que** la paroi latérale (25) de l'habillage (22) est escamotable sur toute sa hauteur.

10. Boîtier d'isolation suivant la revendication 9, **caractérisé en ce que**, à compter de son bord libre, la paroi latérale (25) de l'habillage (22) est subdivisée en au moins deux portions (25', 25"), avec, à la base de chacune de ces portions (25', 25"), une zone de moindre résistance (39) propre à permettre l'élimination de la ou des portions (25', 25") sus-jacentes.

11. Boîtier d'isolation suivant l'une quelconque des revendications 1 à 10, **caractérisé en ce que**, le long de son pourtour, la paroi latérale (25) de l'habillage (22) est fractionnée en pans (41) par des fentes (42).

12. Boîtier d'isolation suivant l'une quelconque des revendications 1 à 11, **caractérisé en ce que**, sur une partie au moins de son pourtour, le fond (29) de l'habillage (22) comporte, au moins localement, au-delà de la paroi latérale (25) de cet habillage (22), un prolongement (44).

13. Boîtier d'isolation suivant la revendication 12, **caractérisé en ce que** le prolongement (44) du fond (29) de l'habillage (22) est au moins en partie escamotable.

14. Boîtier d'isolation suivant la revendication 13, **caractérisé en ce que** le prolongement (44) du fond (29) de l'habillage (22) est escamotable sur toute son extension.

15. Boîtier d'isolation suivant l'une quelconque des revendications 12 à 14, **caractérisé en ce que** le prolongement (44) du fond (29) de l'habillage (22) est fractionné en pans (46) par des fentes (47).

16. Boîtier d'isolation suivant les revendications 11 et 15, prises conjointement, **caractérisé en ce que** les fentes (47) sont établies en correspondance avec les fentes (42).

## Claims

1. An insulative housing (20) for equipment to be attached to the base section (11) of trunking (10) by means of a support (18), the base section (11) having a back (12) and two side flanges (13) that extend toward each other substantially perpendicularly to the back (12), the two side flanges (13) having along their free edge two rims (14) that extend toward each other parallel to the back (12), together defining an outlet (15), the support (18) being operative at the level of the outlet (15) of said base section (11) and extending from one to the other of said two rims (14), the housing including suspension means (21) for attaching it to the support (18) and a shroud (22) adapted to surround the equipment attached to the support (18), at a distance therefrom, the shroud (22) having over at least part of its perimeter a side wall (25), **characterised in that** its suspension means (21) are suspension members (26) which have attachment means (27) at two or more different levels and **in that**, over at least a part of its perimeter, at least the top portion (25') of the side wall (25) of its shroud (22) is removable.

2. An insulative housing according to claim 1 **characterised in that** the suspension members (26) have at least two sections (26', 26") starting from their free end, each of which is provided with attachment means (27) to provide the aforementioned attachment means (27) at two different levels, and separated from each other by a weaker area (33) for eliminating the section (26') at the greater distance from the back (29) of the shroud (22).

3. An insulative housing according to claim 2 **characterised in that** the attachment means (27) are of the same kind on both sections (26', 26") of the suspension members (26).

4. An insulative housing according to any of claims 1 to 3 **characterised in that** the shroud (22) has a back (29) with which the suspension members (26) are integral.

5. An insulative housing according to claim 4 **characterised in that** the suspension members (26) form part of the side wall (25) of the shroud (22).

6. An insulative housing according to claim 5 **characterised in that** the suspension members (26) are isolated from the rest of the side wall (25) of the shroud (22) by slots (32) running their full height.

7. An insulative housing according to any of claims 1 to 6 **characterised in that** the side wall (25) of the shroud (22) has a globally rectangular contour in plan view with two transverse panels (25A) and two longitudinal panels (25B) alternating with the two transverse panels (25A) and the middle portion (30) of the transverse panels (25A) is set back relative to their end portion (31).

8. An insulative housing according to claim 5 in conjunction with claim 7 **characterised in that** the suspension members (26) are operative between the middle portion (30) of the transverse panels (25A) of the side wall (25) of the shroud (22) and the end portions (31) of the transverse panels (25A).

9. An insulative housing according to any of claims 1 to 8 **characterised in that** the side wall (25) of the shroud (22) is removable over its entire height.

10. An insulative housing according to claim 9 **characterised in that**, from its free end, the side wall (25) of the shroud (22) is divided into at least two portions (25', 25") with a weaker area (39) at the base of each of these portions (25', 25") to enable the overlying portion or portions (25', 25") to be eliminated.

11. An insulative housing according to any of claims 1 to 10 **characterised in that** the side wall (25) of the shroud (22) is divided into panels (41) around its perimeter by slots (42).

12. An insulative housing according to any of claims 1 to 11 **characterised in that** the back (29) of the shroud (22) has an extension (44) over at least a part of its perimeter, at least locally and beyond the side wall (25) of the shroud (22).

13. An insulative housing according to claim 12 **characterised in that** at least part of the extension (44) of the back (29) of the shroud (22) is removable.

14. An insulative housing according to claim 13 **characterised in that** the whole of the extension (44) of the back (29) of the shroud (22) is removable.

15. An insulative housing according to any of claims 12 to 14 **characterised in that** the extension (44) of the back (29) of the shroud (22) is divided into panels (46) by slots (47).

16. An insulative housing according to claim 15 in conjunction with claim 11 **characterised in that** the slots (47) are in corresponding relationship to the slots (42).

## Patentansprüche

1. Isolierstoffdose (20) für Installationsgeräte, die mittels eines Trägers (18) auf den Sockel (11) eines Kabelkanals (10) aufsetzbar ist, wobei der Sockel (11) einen Boden (12) und zwei Seitenschenkel (13) aufweist, die sich im Wesentlichen lotrecht zum Boden (12) erstrecken, wobei die beiden Seitenschenkel (13) entlang ihres freien Rands zwei Umbiegungen (14) aufweisen, die sich zueinander parallel zum Boden (12) erstrecken und dabei miteinander eine Öffnung (15) bilden, wobei der Träger (18) in der Öffnung (15) des Sockels (11) so angeordnet ist, dass er sich zwischen den beiden Umbiegungen (14) erstreckt, wobei die Dose (20) einerseits Aufhängemittel (21), durch die sie mit einen derartigen Träger (18) verbunden zu werden vermag, und andererseits eine Ummantelung (22) umfasst, durch die sie das auf den Träger (18) aufgesetzte Installationsgerät mit Abstand zu umgeben vermag, wobei die Ummantelung (22) an wenigstens einem Teil ihres Umfangs eine Seitenwand (25) aufweist,
**dadurch gekennzeichnet, dass** ihre Aufhängemittel (21) Aufhänger (26) sind, die mit Verbindungsmitteln (27) in wenigstens zwei verschiedenen Höhen versehen sind, und dass gleichzeitig an wenigstens einem Teil ihres Umfangs zumindest das obere Stück (25') der Seitenwand (25) ihrer Ummantelung (22) wegklappbar ist.

2. Isolierstoffdose nach Anspruch 1,
**dadurch gekennzeichnet, dass** die Aufhänger (26) von ihrem freien Ende ausgehend wenigstens zwei Abschnitte (26', 26") aufweisen, die jeweils mit derartigen Verbindungsmitten (27) versehen sind, damit Verbindungsmittel (27) in zwei verschiedenen Höhen vorhanden sind, und die durch einen Bereich (33) mit geringerer Festigkeit voneinander getrennt sind, der den vom Boden (29) der Ummantelung (22) am weitesten entfernten Abschnitt (26') zu entfernen erlaubt.

3. Isolierstoffdose nach Anspruch 2,
**dadurch gekennzeichnet, dass** bei beiden Abschnitten (26', 26") der Aufhänger (26) die Verbindungsmittel (27) vom gleichen Typ sind.

4. Isolierstoffdose nach einem der Ansprüche 1 bis 3,
**dadurch gekennzeichnet, dass** die Aufhänger (26), da die Ummantelung (22) einen Boden (29) aufweist, von diesem Boden (29) ausgehen.

5. Isolierstoffdose nach Anspruch 4,
**dadurch gekennzeichnet, dass** die Aufhänger (26) an der Bildung der Seitenwand (25) der Ummantelung (22) beteiligt sind.

6. Isolierstoffdose nach Anspruch 5,
**dadurch gekennzeichnet, dass** die Aufhänger (26) vom übrigen Teil der Seitenwand (25) der Ummantelung (22) durch Schlitze (32), die über ihre gesamte Höhe verlaufen, getrennt sind.

7. Isolierstoffdose nach einem der Ansprüche 1 bis 6,
**dadurch gekennzeichnet, dass** die Seitenwand (25) der Ummantelung (22) in Draufsicht einen allgemein rechteckigen Umriss hat, wobei sie zwei Querelemente (25A) und im Wechsel mit diesen beiden Querelementen (25A) zwei Längselemente (25B) umfasst, und das Mittelteil (30) der Querelemente (25A) gegenüber deren Endteil (31) zurückspringt.

8. Isolierstoffdose nach einem der Ansprüche 5 und 7, in Verbindung miteinander,
**dadurch gekennzeichnet, dass** die Aufhänger (26) zwischen dem Mittelteil (30) der Querelemente (25A) der Seitenwand (25) der Ummantelung (22) und den Endteilen (31) der Querelemente (25A) angeordnet sind.

9. Isolierstoffdose nach einem der Ansprüche 1 bis 8,
**dadurch gekennzeichnet, dass** die Seitenwand (25) der Ummantelung (22) über ihre gesamte Höhe wegklappbar ist.

10. Isolierstoffdose nach Anspruch 9,
**dadurch gekennzeichnet, dass** die Seitenwand (25) der Ummantelung (22) von ihrem freien Rand ausgehend in wenigstens zwei Teilstücke (25', 25") unterteilt ist, wobei an der Basis eines jeden Teilstücks (25', 25") ein Bereich mit geringerer Festigkeit (39) vorhanden ist, der das oder die darüberliegenden Teilstücke (25', 25") zu entfernen erlaubt.

11. Isolierstoffdose nach einem der Ansprüche 1 bis 10,
**dadurch gekennzeichnet, dass** die Seitenwand (25) der Ummantelung (22) entlang ihres Umfangs durch Schlitze (42) in Felder (41) geteilt ist.

12. Isolierstoffdose nach einem der Ansprüche 1 bis 11,
**dadurch gekennzeichnet, dass** der Boden (29) der Ummantelung (22) an wenigstens einem Teil seines Umfangrands zumindest stellenweise jenseits der Seitenwand (25) der Ummantelung (22) eine Verlängerung (44) aufweist.

13. Isolierstoffdose nach Anspruch 12,
**dadurch gekennzeichnet, dass** die Verlängerung (44) des Bodens (29) der Ummantelung (22) wenigstens zum Teil wegklappbar ist.

14. Isolierstoffdose nach Anspruch 13,
**dadurch gekennzeichnet, dass** die Verlängerung (44) des Bodens (29) der Ummantelung (22) über ihre gesamte Erstreckung wegklappbar ist.

15. Isolierstoffdose nach einem der Ansprüche 12 bis 14,
**dadurch gekennzeichnet, dass** die Verlängerung (44) des Bodens (29) der Ummantelung (22) durch Schlitze (47) in Felder (46) geteilt ist.

16. Isolierstoffdose nach den Ansprüchen 11 und 15, in Verbindung miteinander, **dadurch gekennzeichnet, dass** die Schlitze (47) in gegenseitiger Übereinstimmung mit den Schlitzen (42) angeordnet sind.
